# EUROPEAN PATENT APPLICATION

(11) **EP 3 403 492 A1**
(43) Date of publication of application: **21.11.2018**
(21) Application number: 17738109.2
(22) Date of filing: 09.01.2017
(51) Int. Cl.: A01K 1/03, A01K 1/02

(54) **NEW ENVIRONMENTALLY FRIENDLY PIG HOUSE**

(30) Priority: 11.01.2016 CN 201610015400; 25.08.2016 CN 201610724253; 25.08.2016 CN 201610723546; 25.08.2016 CN 201610724239; 25.08.2016 CN 201610724661; 25.08.2016 CN 201610723438
(71) Applicant: Dai, Jinnan, Zhangzhou, Fujian 363905 (CN)
(72) Inventor: Dai, Jinnan, Zhangzhou, Fujian 363905 (CN)
(74) Representative: Verscht, Thomas Kurt Albert
(86) International application number: PCT/CN2017/070600
(87) International publication number: WO 2017/121295

(57) **Abstract**

An environmentally friendly pig house comprises at least one round or polyhedral pig house building (100, 200, 300, 400). Each polyhedron has five faces or more, and a ventilation shaft (102, 202) is provided in the middle of each storey of each pig house building (100, 200, 300, 400); each floor tilts from high to low towards the ventilation shaft from the outer edge; the top of each pig house building (100, 200, 300, 400) is provided with a waste gas collecting and treatment device (700) communicating with the ventilation shaft (102, 202); and the bottom of the buildings are provided with pig excreta collecting devices corresponding to the opening of the ventilation shaft. A first channel (3102) and a second channel (3103) are nested in the ventilation shaft (102, 202) in the middle of the pig house buildings (100, 200, 300, 400) in a direction along the axis of symmetry of the pig house building; the first channel (3102), which is located inside, is sealed on the top and connected to an air treatment channel (3104) on the bottom and communicates with an air outlet of an air intake device (3105); the second channel (3103), which is located outside, communicates with the pig excreta collecting device on the bottom and communicates with the outside air on the top, the air treatment channel (3104) having a blowing device, a sensor, a shower cooling device, a refrigerating device, and a heating device. Pig excreta can automatically flow into the ventilation shaft, and can be collected by the pig excreta collecting device at the bottom of the building; waste gas is collected, treated, and discharged into the atmosphere; the pig house occupies a small area, has strong wind and snow resistant functions, and is sturdy and durable. The culturing process is pollution-free, and piglets, pigs, and sows can be accommodated appropriately.

## Description

### Technical Field

The invention relates to the field of pig breeding, in particular to a novel environment-friendly piggery.

### Background technique

Piggery in China are mostly single-floor with large spacing and occupy a lot of land. The structure of the piggery is not good, and the function of resistance to wind and snow are poor. It cannot be sealed for gas disinfection, the disinfection is not complete. It is only equipped with water curtain cooling facility, it cannot keep constant temperature and humidity for four seasons, cannot be automatically ventilated, the concentration of harmful gases is high in winter. After the pig manure is dry, it cannot be harmlessly fermented into organic fertilizer on the spot, it is not easy to discharge the biogas after the pig urine flushing water biogas fermentation, the environmental protection investment is large, and the operating cost is high. There is no purification treatment for the exhaust gas, the smell in the piggery and surrounding areas is large, there are many mosquitoes, and the environment is not good. Dry feed is used, although the drinker are provided, the pigs have insufficient drinking water and the health is affected. Because of the poor environment and improper feeding methods, the pigs are in a semi-stress state and are prone to morbidity. Therefore, the farmers have added a large amount of antibiotics in the feed and drinking water. The drug residues of the pork are not up to standard and affects food safety. Although a variety of new piggery and various new feeding modes have emerged at present, they still cannot solve the above problems systematically.

### Summary of the Invention

In view of this, the present invention aims to provide a novel environment-friendly piggery that can fundamentally solve the above problems. The specific solution is as follows:

A novel environment-friendly piggery comprising at least one circular or polyhedral piggery building, the polyhedron has at least five sides, and ventilation shafts is provided in the middle of each floor of the piggery building; the each floor is declining from an outer edge to the ventilation shaft, the top end of each piggery building is provided with an exhaust gas collection and treatment device in communication with the ventilation shaft, and a pig excreta collection device corresponding to the ventilation shaft is at the bottom of the building.

In a preferred embodiment of the invention, the floor of the piggery building is divided into a plurality of symmetrical chambers in a radial direction using dividers;

a first duct and a second duct are provided concentrically to a symmetry axis of the piggery building in the middle ventilation shaft of the piggery building; the interior first duct has a sealed top end, and a bottom end connected with an outlet of an air supply device; the exterior second duct has a bottom end in communication with a pig excreta collecting device, and a top end in communication with the atmosphere;

a wall of the first duct is an inner wall of the second duct, an outer wall of the second duct is an inner wall of the chamber, the second duct is provided with a hole for communicating with the chamber; a ceiling of the chamber is provided with an air inlet fan; fresh air is introduced from the first duct and then passed through the second duct through the pipeline, and sent into the chamber by the air inlet fan, dirty air in the chamber passes through the hole and enters the second duct to be discharged; the excreta in the chamber passes through the hole into the second duct then falls into the pig excreta collection device.

In a preferred embodiment of the invention, the top end of the second duct is connected to the atmosphere through an exhaust gas collection and treatment device; the dirty air in the piggery is exhausted through the second duct, and then is discharged after being purified by the collection and treatment device.

In a preferred embodiment of the invention, the floor of the piggery building is divided into a plurality of symmetrical chambers in a radial direction using dividers;

a first duct is provided in the middle of the piggery building in a direction of a symmetry axis of the piggery building, the first duct having a sealed top end, and a bottom end connected to an air treatment duct;

the air treatment duct is provided with an air supply device, a sensor, a spray cooling device, a refrigeration device, and a heating device; the sensor detects the air temperature and humidity of air sent to the air treatment duct by the air supply device; when the air humidity is high and the temperature is low, the heating device starts to heat the air to raise the temperature; when the air temperature is high and the humidity is low, the spray cooling device starts to cool and humidify the air; when the air temperature is high and the humidity is high, the refrigeration device starts to cool and dehumidify the air;

the first duct sends the treated air in the air treatment duct into each chamber;

the air treatment duct has a length of 30-40 meters and a cross-sectional area of 6-8 square meters;

the spray cooling devices are provided in three groups, base on the air temperature and humidity, the three spray cooling devices start one, two or three groups.

In a preferred embodiment of the invention, a duct and auxiliary facility building is provided beside the piggery building, and a duct and auxiliary facility building is provided with an elevator chamber and a stairs chamber; there are at least 4 floors in the piggery building, a connection part is set between the duct and auxiliary facility building and the piggery building so that each floor of the piggery building is connected horizontally with the duct and auxiliary facility building; each piggery building is provided with a positive pressure ventilation system and feed delivery system.

In a preferred embodiment of the invention, four piggery buildings are provided , namely a first piggery building, a second piggery building, a third piggery building and a fourth piggery building; the four piggery buildings are arranged in squares; the first piggery building is a nursery piggery building, and the second piggery building is piggery building for medium pigs, the third piggery building and the fourth piggery building are piggery building for large pigs; the duct and auxiliary facility building that communicate with the four piggery buildings respectively are provided in the middle of the four piggery buildings.

In a preferred embodiment of the invention, the floor of each chamber of the piggery building is provided with three steps descending sequentially from the side distal to the ventilation shaft to the inner side proximate to the ventilation shaft; the outermost step is the pig sleeping area; the middle step is the pig feeding area; and the innermost step is the pig excretion area.

In a preferred embodiment of the invention, the floor of each step is inclined from high to low from the outer side to the inner side; and the innermost step communicates with the second duct so that excretions in the excretion area enter the second duct through the hole and fall into the pig excreta collection device;

the height of the step is 5-15 cm, the floor slope of the step is 1%-3%;

the outermost step area accounts for 50%-60% of the area of the piggery, and the innermost step area accounts for 10%-15% of the area of the piggery.

In a preferred embodiment of the invention, the piggery building is five circular buildings, three of which are pregnant sow buildings and two are farrowing sow building, one pregnant sow building is located in the central position, and the other two pregnant sow buildings and two farrowing sow buildings are arranged around the pregnant sow building which is in the central position, 90 degrees apart from each other, and between, each floor of each piggery building is connected to the pregnant sow building in the central location with a connection part; the pregnant sow building in the central location is provided with elevators and stairs;

there is a first duct in the middle ventilation shaft of each piggery building along the direction of the symmetry axis of the piggery building, the top end of which is sealed, and the bottom end is connected to an air treatment duct;

the air treatment duct is provided with an air supply device, a sensor, a spray cooling device, a refrigeration device, and a heating device; the sensor detects the air temperature and humidity of air sent to the air treatment duct by the air supply device; when the air humidity is high and the temperature is low, the heating device starts to heat the air to raise the temperature; when the air temperature is high and the humidity is low, the spray cooling device starts to cool and humidify the air; when the air temperature is high and the humidity is high, the refrigeration device starts to cool and dehumidify the air;

In a preferred embodiment of the invention, each floor of the farrowing sow building from inside to outside and is mainly divided into three lanes, an inner circle piggery located inside, an outer circle piggery located outside and an aisle between them; the inner circle piggery and outer circle piggery are divided into multiple chambers with a divider; each chamber is provided with a sow positioning unit, which includes a rectangular sow positioning space by small divider and a feed trough at one end of the sow positioning space, the feed trough is located at the end away from the aisle;

the second duct is provided with a hole connected to inner circle piggery on the floor; the ceiling of the piggery is provided with an inlet fan; fresh air is introduced from the first duct and passes through the second duct through the pipeline and been sent into the piggery by the air inlet fan, and the dirty air in the piggery is discharged through the hole into the second duct;

the section of the outer circle piggery divider of farrowing sow building facing the outer wall is movable or bendable, bendable at an angle to form a triangular area, a lid is provided after bending above the triangular area to form a piglet heat preservation area; the inner circle piggery is divided into a chamber with a divider, the section of the divider facing the aisle is movable or bendable, bendable at an angle to form a triangular area, a lid is provided after bending above the triangular area to form a piglet heat preservation area;

the side of the aisle of the farrowing sow building near to outer circle piggery is provided with an external groove, and the floor of each chamber of the outer circle piggery is inclined toward the external groove from the outside to the inside, the external groove is provided with a leak hole at every interval, the pig excreta in the outer circle piggery falls into the pig excreta collection device on the first floor from the leak hole; the side of the aisle near the inner circle piggery is provided with an internal groove; and floor of each chamber of the inner circle piggery is inclined toward the internal groove from the outside to the inside, the internal groove is provided with a leak hole at every interval, the pig excreta in the inner circle piggery falls into the pig excreta collection device on the first floor from the leak hole.

In a preferred embodiment of the invention, each floor of the pregnant sow building floor is divided into three lanes from inside to outside, the inner circle piggery located inside, and the outer circle piggery located outside, and the aisle between the two; the second duct is provided with a hole connected to inner circle piggery on the floor; the ceiling of the piggery is provided with an inlet fan; fresh air is introduced from the first duct and passes through the second duct through the pipeline and been sent into the piggery by the air inlet fan, and the dirty air in the piggery is discharged through the hole into the second duct;

the outer circle piggery is divided into multiple chambers in the radial direction, each chamber is used for rearing two pregnant sows, and each chamber is provided with a feed trough, the inner circle piggery is also divided by a radial divider into multiple chambers, each chamber containing two pregnant sows, and each chamber is provided with a feed trough; the side of the aisle near the outer circle piggery is provided with a groove, and floor of the chamber of each outer circle piggery is inclined toward the groove from outside to inside, the groove is provided with a leak hole at every interval, the pig excreta of the outer circle piggery falls from the leak hole into the pig excreta collection device on the first floor; the inner circle piggery is inclined from the outside to the inside toward the second duct; excretions in the pig penis enter the second duct through the hole to the pig excreta collection device;

a feed trough is provided on the side of the outer circle piggery near the aisle, and a feed trough is provided on the side of the inner circle piggery near the aisle.

In a preferred embodiment of the invention, the piggery buildings are four circular piggery buildings, which are a first piggery building and a second piggery building, a third piggery building and a fourth piggery building respectively, the four piggery buildings are arranged in squares, each circular building is provided with 5-10 floors, in the middle of the four piggery buildings, there are duct and auxiliary facility buildings; among four piggery buildings, the first piggery is a nursery piggery and the remaining three are piggery buildings for medium and large pigs.

The floor of the nursery piggery is divided into functional areas by a divider, and each floor is divided into eight chambers; each chamber is provided with a heat preservation chamber on the side of the outer edge; the heat preservation chamber is provided with a heating device, and the heat preservation chamber is provided with a circular feed trough near the side of ventilation shaft; the top end of the heat preservation chamber is provided with an aisle;

the piggery buildings for medium and large pigs floor planes are divided into functional areas by dividers, each floor is divided into eight chambers; each chamber is provided with a feed trough on the outside, and each feed trough is divided into eight feed positions by steel pipelines; feed trough is provided with an aisle.

In a preferred embodiment of the invention, the piggery is four circular piggery buildings; among the four circular piggery buildings, one is a pregnant sow building, two for the farrowing sow building, the remaining one for the replacement gilt, empty sow, boar comprehensive building;

in the pregnant sow building, each floor of the pregnant sow building is divided into eight chambers with dividers; each chamber is divided into six positioning units in the radial direction using small dividers, and the floor of the positioning unit is provided with a cold water circulation system; each chamber is provided with an activity chamber; the activity chamber is located between the positioning unit and the ventilation shaft; each positioning unit is provided with a feed trough by one side of the outer edge of the circle, and an aisle is provided above the feed trough;

in the farrowing sow building, each floor is divided into 12 equal parts, is divided into 12 chambers by dividers, one of the chambers serves as a duct, and each of the other chambers is rearing a farrowing sow; each chamber is provided with a positioning unit, the positioning unit is located in the middle of the chamber, the floor of the positioning unit is provided with a cold water circulation system, the feed trough is located at one end of the positioning unit, and each chamber is provided with a heat preservation chamber near the end of the outer surrounding wall, the heat preservation chamber is provided with a heating device, an aisle is provided on the top end of the heat preservation chamber.

The advantages of the present invention are as follows:

1. The piggery occupies a small area, has strong wind and snow resistant functions, and is sturdy and durable.

2. It does not need flushing. Pig manure and urine can be directly collected from the ventilation shafts, and can be directly fermented to become the solid organic fertilizer. No sewage is discharged, and the exhaust gas can be purified to achieve the discharge standard.

3. The ventilation can been automatically controlled, it can be kept constant temperature, constant humidity, the air which enters the floor can be filtered and sterilized.

Through nested first duct and second duct, fresh air is passed through the second duct from the first duct through the pipeline and been sent into the chambers through the air supply device. The dirty air in the chambers is discharged through the exhaust gas collection and treatment device at the top end of the second duct. Since all the chambers in a piggery share the first duct and the second duct for air intake and exhaust, it is convenient to automatically control the ventilation of the whole piggery, keep it constant temperature and humidity, and the air entering the floor can be filtered and sterilized. Since the first duct and the second duct are arranged in a nested manner, the dirty air in the second duct exchanges heat between the outer wall of the first duct and the fresh air in the first duct during the discharging process, and can be effectively recovery the heat in the dirty air to heat the fresh air in the cold season.

4. There are no mosquitoes in the piggery. Each floor can be independently closed for ozone gas disinfection, with high efficiency without residue.

5. The whole process can be fed with liquid fermented feed, fed 3-6 meals a day, with automated feeding. The pigs have sufficient drinking water and few diseases.

6. The arrangement of piglets, medium and large pigs and sows is reasonable, which conforms to the physiological habits of pigs at different ages.

The sleeping area, the feeding area and the excretion area are separated from each other. The sleeping area and the feeding area are no longer dirty, and the manure and urine in the excretion area can be sent to the pig excreta collecting device through the duct for collection. It is convenient and efficient.

The circle aisle facilitates to drive the sow to increase the movement of the sow and solves many problems of the breeding sow in the positioning bar caused by the low activity, and at the same time, it avoids serious sow polyculture fighting.

### Description of the drawings

Fig. 1 is a layout diagram of the first embodiment and the second embodiment of the present invention;
Fig. 2 is a front view diagram of the first embodiment and the second embodiment of the present invention;
Fig. 3 is a layout diagram of the piglet floor of the first embodiment of the present invention;
Fig. 4 is a layout diagram of medium and large pig floor of the first embodiment of the present invention;
Fig. 5 is a layout diagram of the pregnant sow building floor of the second embodiment of the present invention;
Fig. 6 is a layout diagram of the farrowing sow floor of the second embodiment of the present invention;
Fig. 7 is a view diagram of the floor of the third embodiment of the present invention;
Fig. 8 is a layout diagram of the pregnant sow building of the fourth embodiment of the present invention;
Fig. 9 is the first view diagram of the pregnant sow building floor of the fourth embodiment of the present invention;
Fig. 10 is a second view diagram of the pregnant sow building floor of the fourth embodiment of the present invention;
Fig. 11 is a plan view of the floor structure of the fifth embodiment of the present invention; and
Fig. 12 is a view diagram of the floor structure of a farrowing sow of the fifth embodiment of the present invention.

### Detailed Description

The following further describes the present invention in combination with specific embodiments:

In all embodiments, the "outer side" refers to the direction from the center of the circle to the circumference, and the "inner side" refers to the side from the circumference to the center of the circle.

### Embodiment 1

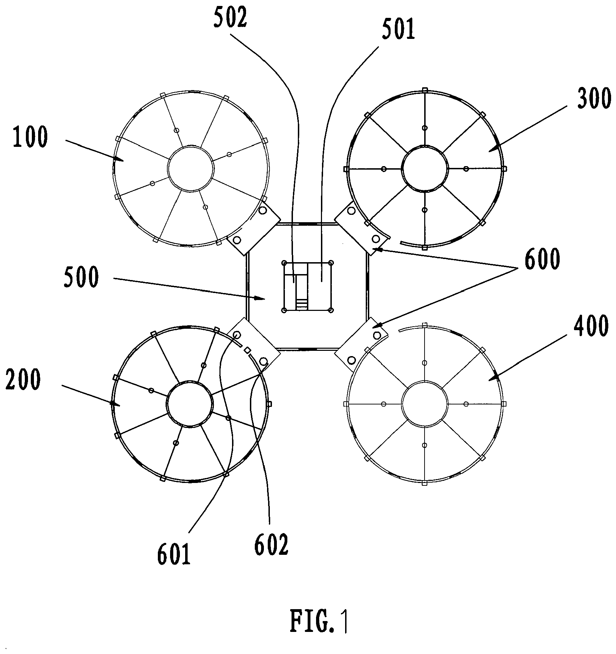

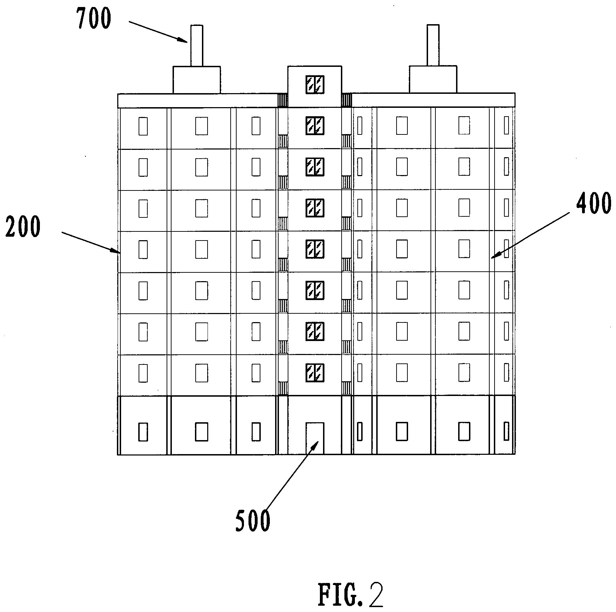

Referring to Fig. 1 and Fig. 2, the piggery of the present invention may include four circular buildings, namely, a first piggery building 100, a second piggery building 200, a third piggery building 300 and a fourth piggery building 400. The four buildings may be arranged in squares, and the outline structure of each piggery building may be the same. A duct and auxiliary facility building 500 may be provided in the middle of the four piggery buildings. The duct and auxiliary facility building 500 may be provided with an elevator chamber 501 and a stairs chamber 502. The piggery building, the duct and auxiliary facility building adopt the reinforced concrete frame structure, and the duct and auxiliary facility building may be octahedral. The first piggery building 100, the second piggery building 200, the third piggery building 300 and the fourth piggery building 400, and the duct and auxiliary facility building 500 constitute one breeding unit.

The outer diameter of the circular building may be 13 meters, the circular building has 8 floors, the first floor height may be 5 meters and the remaining 7 floors may be 3.5 meters. The floor may be divided into functional areas according to the characteristics of pregnant sows, farrowing sows, nursery piglets, medium and large pigs. The floor may be set to a certain slope to the center. A ventilation shaft with a diameter of 4 meters may be provided at the center. Swine manure may be manually swept into the ventilation shaft and pig urine flows into the ventilation shaft automatically. The first floor does not raise pigs and may be provided with a pig excreta fermentation device. After pig manure and pig urine enter the device, the organic carbon source may be added proportionately to meet the appropriate moisture and carbon-nitrogen ratio, and may be automatically turned over and stirred at regular intervals for aerobic fermentation. Fermentation time may be 5-7 days, packaged for sale as organic fertilizer after fermentation. Each circular building may be provided with an independent positive pressure ventilation system. After the air may be treated in the treatment chamber for constant temperature, humidity, and sterilization, it enters the floors via pipelines and may be ventilated through the central ventilation shaft, and discharged from the roof. A set of exhaust gas collection and treatment device 700 may be provided on the roof of the building. This device can effectively absorb the odor and harmful factors in the exhaust gas and discharge it up to the standard. The floor windows may be lighted windows, the light intensity can be adjusted, if necessary, the windows can be opened. There may be screens on the windows and there are no mosquitoes in the building. The entrance and exit of the window can be sealed, if necessary, ozone gas disinfection is performed, and there may be no residue with high efficiency. With antibiotic-free liquid fermentation feed, each circular building may be provided with a set of conveying system. The feed may be conveyed by a gear pump to the floor feed trough after fermentation in the fermentation groove of the first floor, and the whole process may be controlled automatically. The entrance and exit of pigs may be completed by an elevator inside the octahedron.

The four piggery buildings may be all 8 floors. A connection part 600 may be respectively provided between the duct and auxiliary facility building 500 and each piggery building, so that each floor of each piggery building can be connected horizontally with the duct and auxiliary facility building. Each connecting part 600 may be provided with a vent pipeline 601 and a feed pipeline 602 which can deliver air and feed to each floor of piggery building respectively. An exhaust gas collection and treatment device 700 may be provided at the top end of each piggery building. In other embodiments, the vent pipeline 601 and the feed pipeline 602 may also be provided at other locations, but it is preferably provided at the connection part to save space and facilitate maintenance.

In the present embodiment, the division of the four piggery buildings may be as follows: the first piggery building 100 may be a nursery piggery building and the remaining three may be piggery buildings for medium and large pigs.

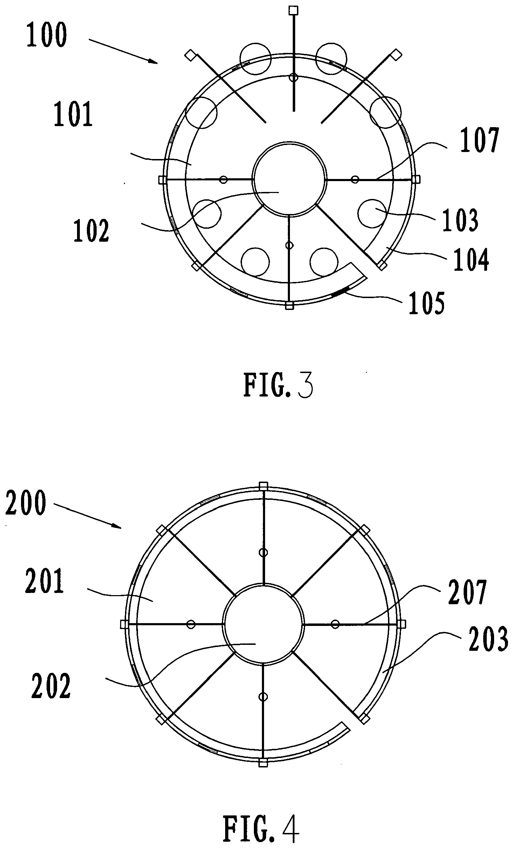

Referring to Fig. 3, the floor plan of the nursery piggery building may be divided into functional areas by a divider 107. Each floor may be divided into eight chambers 101, 24 nursery pigs per chamber, 192 per floor, and the number of piglets raised in the entire building may be 1344. A ventilation shaft 102 may be provided in the middle of the floor, and the floor of each chamber 101 may be slightly inclined from the outer edge to the ventilation shaft 102 from high to low. The inclined angle may be about 3 degrees. Each floor of pig manure can be dropped from the ventilation shaft 102 by sweeping, the pig urine flows in automatically, and may be collected by the collecting device at the bottom end of the first floor.

Each chamber may be provided with a heat preservation chamber 105 on the side of the outer edge. The floor of the heat preservation chamber 105 may be provided with a hot water circulation system, it is dry and warm, and a feed circular groove 103 may be provided on the side of the heat preservation chamber that is close to the ventilation shaft 102. The diameter of the circular groove may be 1.5 meters and the center may be higher. The outer circular may be welded with a railing. Each piglet may be provided with a feed position. The piglet enters the feed position when it may be 8-10 kg and when it may be raised to 45-50 kg, it will put into a piggery buildings for large pigs. The feeding time may be about 75 days. The heat preservation chamber may be provided with an aisle, which is the top plate of the heat preservation chamber. The top plate may be 0.8 meters higher than the floor of the heat preservation chamber, and people can walk on it.

The divider 107 can be opened as a duct on the side of the inner circle. Air temperature and humidity may be adjusted according to piglet characteristics. 9-25 kg of pigs use pig nursery feed, and 25-50 kg of pigs use small pigs feed. The feed may be diluted 1:3 in the first floor, after fermentation it may be conveyed by a gear pump to feed troughs for automated feeding. The pig manure was manually swept into the ventilation shaft, and the pig urine flowed in automatically. When the pig was diarrhea, it was not cleaned well. It can be cleaned after sprinkling desiccant. The desiccant does not affect pig manure fermentation. The lighting window 105 adjusts the light intensity according to the characteristics of the piglets. After the nursery is completed, all piglets in the nursery piggery will be transferred out. After the transfer, the floors were cleaned and sealed for ozone disinfection.

The piggery buildings for medium and large pigs division are showed in Fig. 4. The floor planes may be still divided into functional areas with a divider 207, and each floor may be divided into eight chambers 201. A ventilation shaft 202 may be provided in the middle of the floor, and the floor of each chamber 201 may be slightly inclined from the outer edge to the ventilation shaft 202 from high to low. The inclined angle may be about 3 degrees. Each floor of pig manure can be dropped from the ventilation shaft 202 by sweeping, the pig urine flows in automatically, and may be collected by the collecting device at the bottom end of the first floor.

Each of the chambers 201 feed 8 pigs, and each floor feed 64 pigs. Each piggery building feed 448 pigs and 3 buildings feed 1344 pigs. They just managed to pick up piglets from a nursery piggery. The feed trough 203 may be at the sector-shaped outer arc end and may be divided into eight feed positions by steel pipelines. An aisle may be built on the feed trough. The side part of the divider near the inner circle can be opened for the walk of the breeder and the entrance and exit of the large pigs. 50 kg of medium pigs enter, 120 kg are slaughtered, and feeding time may be 75 days. 50-80 kg pigs use medium pig feed and pigs which weight over 80 kg use large pig feed. Liquid feed may be automatically conveyed with gear pump. Temperature, humidity and light intensity may be adjusted according to the characteristics of medium and large pigs. After the transfer, the floors were cleaned and sealed for ozone disinfection.

### Embodiment 2

The piggery of the present invention may also include four circular buildings. The four piggery buildings may be arranged in squares, and the structure of each piggery building may be the same. A duct and auxiliary facility building may be provided in the middle of the four piggery buildings. The duct and auxiliary facility building may be provided with an elevator chamber and a stairs chamber 502.

The four piggery buildings may be all 8 floors. A connection part may be respectively provided between the duct and auxiliary facility building and each piggery building, so that each floor of each piggery building can be connected horizontally with the duct and auxiliary facility building. Each connecting part may be provided with a vent pipeline and a feed pipeline which can deliver air and feed to each floor of piggery respectively. An exhaust gas collection and treatment device may be provided at the top end of each piggery building.

Which is different from embodiment 1, in this embodiment, the four piggery building may be divided as follows; among the four circular piggery buildings, one may be a pregnant sow building, two for the farrowing sow building, the remaining one for the replacement gilt, empty sow, boar comprehensive building.

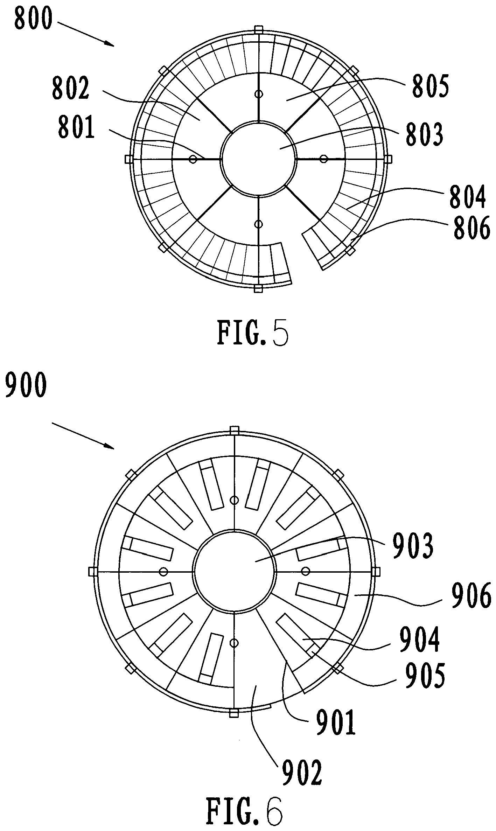

Referring to Fig. 5, in a pregnant sow building 800, each floor of a pregnant sow building may be divided into 8 chambers 802 by a divider 801, and the chamber which may be provided with a door and a connecting part feed 4 pigs, and the rest chamber feed 6 pigs, a total of 46 pigs were raised on the first floor. A ventilation shaft 803 may be provided in the middle of the floor, and the floor of each chamber 802 may be slightly inclined from the outer edge to the ventilation shaft 803 from high to low. The inclined angle may be about 3 degrees. The pig manure of each floor can be dropped from the ventilation shaft 803 by sweeping, the pig urine flows in automatically, and may be collected by the collecting device at the bottom end of the first floor.

Each chamber 802 may be divided into 6 positioning units in a radial direction by a small divider 804. The floor of the positioning unit may be provided with a cold water circulation system, and it is advantageous to reduce the temperature in the summer. Each chamber may be provided with an activity chamber 805. The activity chamber 805 may be disposed between the positioning unit and the ventilation shaft 803. In each chamber, a sow can be put into the activity chamber every day, taking turns. Liquid feed may be used, delivered by the gear pump, it may be controlled automatically. Each positioning unit may be provided with a feed trough 806 on the side of the outer edge of the circle, and there may be an aisle above the feed trough 806. The divider 801 can be opened near the inside of the ventilation shaft 803, and can be moved to be a duct if necessary. It may be good for sows to go in and out.

Referring to Fig. 6, in the farrowing sow building 900, each floor may be divided into 12 equal parts, and divided into 12 chambers 902 by a divider 901. One of the chambers serves as a duct, and each of the other chambers raises a sow. The ventilation shaft 903 may be provided in the middle of the floor, and the floor of each chamber 902 may be slightly inclined from the outer edge to the ventilation shaft 903 from high to low. The inclined angle may be about 3 degrees. The pig manure of each floor can be dropped from the ventilation shaft 903 by sweeping, the pig urine flows in automatically, and may be collected by the collecting device at the bottom end of the first floor.

The sow uses a positioning unit 904. The positioning unit 904 may be located in the middle of the chamber 902. The floor of the positioning unit 904 may be provided with a cold water circulation system. The feed trough 905 may be provided at one end of the positioning unit 904, so that the mother can be used with the same feed, and it can effectively adjust the feeding of suckling pigs without using teaching feeds. Each chamber 902 may be provided with a heat preservation chamber 906 at the end near the outer peripheral wall. The heat preservation chamber 906 floor may be provided with a hot water circulation system, which is dry and warm. The top plate of the heat preservation chamber may be 0.8 meters high and people can walk on it. At weaning, the sow's position divider may be turned on, the sow may be moved from the movable divider to the empty piggery, and the suckling pig may be provided in the farrowing building and fed with weaning feed for 7-15 days.

The replacement gilts, empty sows, and boar piggery buildings may be divided as the piggery buildings for large pigs (embodiment 1, Fig. 4). The replacement gilts may be fed with 8 heads per chamber, and the empty sows 4-6 heads per chamber, the boar 1 per chamber, using liquid feed, fed according to their characteristics.

### Embodiment 3

Referring to Fig. 1 and Fig. 2, the piggery of the present invention may include four cylindrical buildings, namely, a first piggery building 100, a second piggery building 200, a third piggery building 300 and a fourth piggery building 400. The four piggery buildings may be arranged in squares, and the outline structure of each piggery building may be the same. A duct and auxiliary facility building 500 may be provided in the middle of the four piggery buildings. The duct and auxiliary facility building 500 may be provided with an elevator chamber 501 and a stairs chamber 502.

The first piggery building 100, the second piggery building 200, the third piggery building 300 and the fourth piggery building 400, and the duct and auxiliary facility building 500 constitute one breeding unit.

In all the embodiments, the cylindrical buildings may be 8 floors, each having a height of 3.9 meters. The bottom floor collects excreta, processes air, and 2-8 floors raise pigs.

In the present embodiment, the division of the four piggery buildings may be as follows: the first piggery building 100 may be a nursery piggery building, the second piggery building 200 may be a piggery building for medium pigs, and the third piggery building and the fourth piggery building 400 may be piggery building for large pigs.

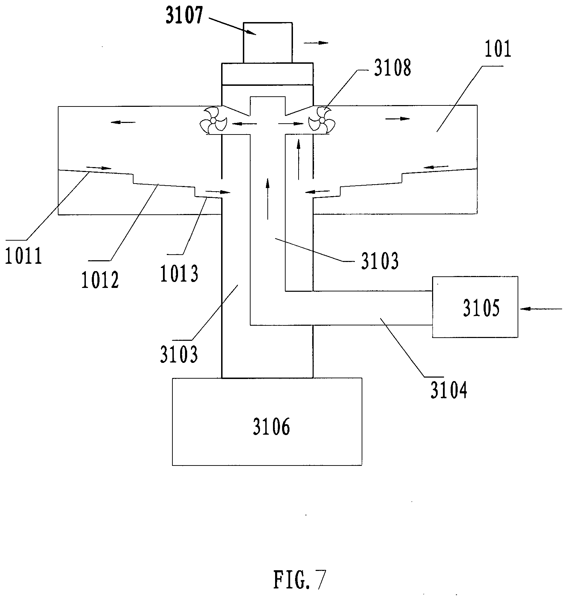

Referring to Fig. 7, the floor plan of the nursery piggery building may be divided into functional areas by a divider 107. Each floor may be divided into 8 chambers 101, 30 nursery pigs per chamber, 240 per floor, and the number of piglets raised in the entire building may be 1680. A first duct 3102 and a second duct 3103 nested along the symmetry axis may be arranged in the middle ventilation shaft of the floor; the cross-sectional diameter of the first duct may be 2 meters, and the cross-sectional diameter of the second duct may be 3.2 meters. The first duct 3102 on the inner side may be sealed at its top end, and the bottom end may be communicated with the air outlet of the air supply device 3105 by an air treatment duct 3104; the bottom end of the second duct 3103 on the outside communicates with the pig excreta collecting device 3106, and the top communicates with the atmosphere by exhaust gas collection and treatment device 3107.

The wall of the first duct 3102 may be the inner wall of the second duct 3103, the outer wall of the second duct 3103 may be an inner wall of the chamber 101, the second duct 3103 may be provided with a hole communicating with the chamber 101, and an inlet fan 3108 may be provided on the ceiling of the chamber 101.

The air path is: the air supply device 3105 introduces fresh air outside into the first duct 3102, and then passes through the second duct 3103 through the first duct 3102, and may be then sent into the chamber 101 by the air inlet fan, flows along the ceiling of the same chamber 101, flows through the outer wall of the chamber 101 and then moves to the floor of the chamber 101 and becomes dirty air. The dirty air flows upwards through the second duct 3102, purified by the exhaust gas collection and treatment device 3107, and then may be discharged, thereby completing the whole process of air circulation. Excretions in the chamber 101 enter the second duct from the hole and fall into the pig excreta collecting device 3106.

Further, a deflector may be provided at the air outlet of the air inlet fan 3108, so that the air inlet fan 3108 forms a uniform fan-shaped air outlet surface.

The floor of each chamber 101 may be provided with three successively descending steps 1011, 1012, 1013 from the outer side of the second duct 3103 toward the inner side of the second duct 3104; the outermost step 1011 may be the pig sleeping area; the middle step 1012 may be a pig feeding area; the innermost step 1013 may be a pig excretion area; the outermost step 1011 area accounts for 50%-60% of the area of the chamber 101, and the innermost step 1013 area accounts for 10%-15% area of the chamber 101. The advantage of this arrangement is that the pig can comprehend its intentions so that it can sleep spontaneously on the outermost step 1011, and excrete on the innermost step 1013. Therefore, each functional area will not affect each other, and it also ensures that the excreta will not pollute the other two steps.

The floor of each step 1011, 1012, 1013 may be inclined from the outside to the inside and from high to low; the height of the step may be 5-15 cm, the floor slope of the step may be 1%-3%; the innermost step 1013 communicates with the second duct 3103 so that the excrement in the discharge area falls through the duct into the pig excreta collection device 3106.

The air treatment duct 3140 has a length of 30-40 meters and a cross-sectional area of 6-8 square meters; the air treatment duct may be provided with an air supply device, a sensor, a spray cooling device, a refrigeration device, and a heating device; the sensor detects the air temperature and humidity of air sent to the air treatment duct by the air supply device; when the air humidity may be high and the temperature may be low, the heating device starts to heat the air to raise the temperature; when the air temperature may be high and the humidity may be low, the spray cooling device starts to cool and humidify the air; when the air temperature may be high and the humidity may be high, the refrigeration device starts to cool and dehumidify the air.

The spray cooling devices may be provided in three groups, base on the air temperature and humidity, the three spray cooling devices start one , two or three groups.

Air temperature and humidity may be adjusted according to piglet characteristics. Pigs weighing 9-30 kg use piglet nursery feed. The feed may be diluted 1:3 in the first floor, after fermented it may be conveyed by a gear pump to feed troughs for automated feeding. The pig manure was manually swept into the circular duct, and the pig urine flowed in automatically. When the pig was diarrhea, it was not cleaned well. It can be cleaned after sprinkling desiccant. The desiccant does not affect pig manure fermentation. The lighting window adjusts the light intensity according to the characteristics of the piglets. After the nursery is completed, all piglets in the nursery piggery will be transferred out. After the transfer, the floors were cleaned and sealed for ozone disinfection.

The floor division structure of the piggery building for medium pigs and piggery building for large pigs may be the same as the structure of the chamber 101, and will not be repeated.

The nursery piglets were kept in a nursery piggery building 100 for 45 days to reach a weight of 30 kg. Then, through the duct and auxiliary facility building, they entered the chamber in the piggery building for medium pigs 200, and in each chamber in the piggery building for medium pigs 200, 30 medium-sized pigs were raised, and after 45 days, they weighed 75 kg. After that, enter the chamber of the piggery building 300, 400, because there may be two piggery building for large pigs, in the chamber of each piggery building for large pigs 300,400, there may be only 15 large pigs, which ensures activity space for the large pigs. After 45 days in captivity, its weight reaches 125 kg and then used as a finished product pig. After the finished product pigs were sold, the floors were cleaned and sealed for ozone disinfection.

### Embodiment 4

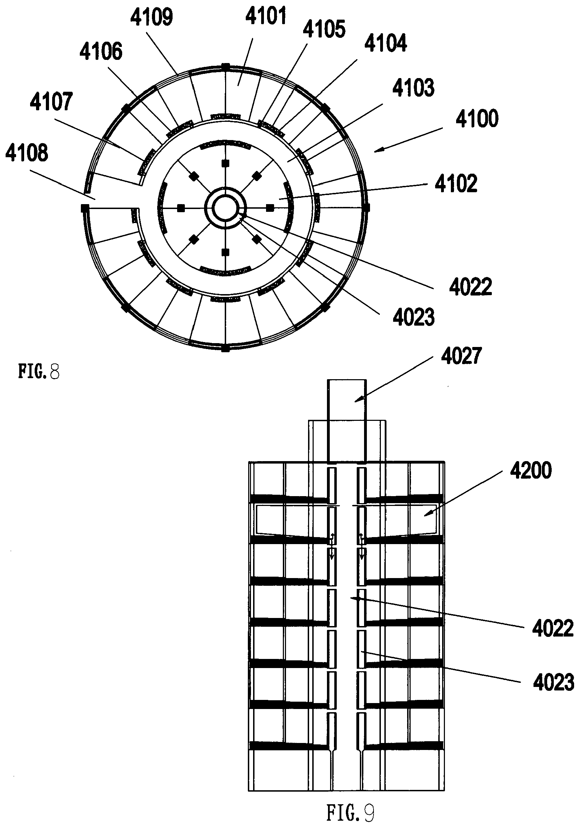

Referring to Fig. 8-Fig. 10. The pregnant sow building of the present invention may be provided with a multi-floor structure. Wherein, referring to Fig. 8, each floor structure is:

The pregnant sow building 4100, which may be round, from the center of the circle, may be divided into three main sections, an inner circle piggery building, an outer circle piggery building and an aisle 4103 between them. The outermost side may be surrounded by walls with windows 4109 at an intervals so as to facilitate lighting.

The outer circle piggery were divided into 24 chambers 4101 (one of which was used as a duct 4108) by a divider 4107. Two small pregnant sows were kept in each chamber, and a total of 46 pigs were raised in the outer circle piggery. In each chamber 4101, there may be a feed trough 4106 near the aisle 4103.

A groove 4104 may be formed on one side of the aisle 4103 near the outer circle piggery, and a leak hole 4105 may be provided at an interval in the groove. Each chamber 4101 also slopes from the outside to inside toward the groove 4104. In this way, pig manure can be swept into the feed trough 4104 by sweeping, and leaked into the leak hole 4105. Pig urine flows in automatically.

The inner circle piggery were divided into 8 chambers 4102 by a divider 4107. Two small pregnant sows were kept in each chamber, and a total of 16 pigs were raised in the inner circle piggery. In each chamber 4102, there may be a feed trough 4106 near the aisle 4103.

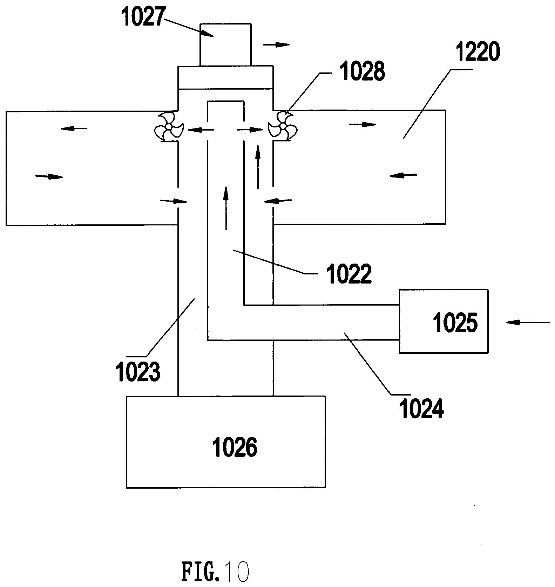

Referring to Fig. 10, a first duct 1022 and a second duct 1023 nested along the symmetry axis may be arranged in the middle ventilation shaft of the floor of pregnant sow building 4100; the cross-sectional diameter of the first duct may be 2 meters, and the cross-sectional diameter of the second duct may be 3.2 meters. The first duct 1022 on the inner side may be sealed at its top end, and the bottom end may be communicated with the outlet of the air supply device 1025 by an air treatment duct 1024; the bottom end of the second duct 1023 on the outside communicates with the pig excreta collecting device 1026, and the top communicates with the atmosphere by exhaust gas collection and treatment device 1027.

The air path is: the air supply device 1025 introduces fresh air from the outside into the first duct 1022. After the fresh air is introduced from the first duct 1022, it is sent through the second duct through the air inlet fan 1028 into the inner circle piggery and the outer circle piggery. Inside, it flows along the ceiling of the piggery, after passing through the outer wall of the piggery and then moving to the floor of the piggery and the fresh air becomes dirty air. The dirty air flows upwards through the second duct 1023 and may be purified by the exhaust gas collection and treatment device 1027 and discharged, thus completing the entire process of air circulation. The excrement in the inner piggery falls through the second duct 1023 into the pig excreta collecting device 1026 (the excrement in the outer piggery falls into the pig manure collecting device 1026 through the other pipeline connected to the leak hole 105 of the groove 104).

Further, a deflector may be provided at the air outlet of the air inlet fan 1028, so that the air inlet fan 1028 forms a uniform fan-shaped air outlet surface.

The air treatment duct 1024 has a length of 30-40 meters and a cross-sectional area of 6-8 square meters; the air treatment duct may be provided with a air supply device, a sensor, a spray cooling device, a refrigeration device, and a heating device; the sensor detects the air temperature and humidity of air sent to the air treatment duct by the air supply device; when the air humidity is high and the temperature is low, the heating device starts to heat the air to raise the temperature; when the air temperature is high and the humidity is low, the spray cooling device starts to cool and humidify the air; when the air temperature is high and the humidity is high, the refrigeration device starts to cool and dehumidify the air.

The spray cooling devices may be provided in three groups, base on the air temperature and humidity, the three spray cooling devices start one , two or three groups.

In each chamber 4101 or 4102, two pregnant sows were raised, and each floor raises 62 heads. The pregnant sow feed may be used. After the water is replenished by 1: 3 to 5, it may be transported to the feed troughs by a gear pump. According to individual differences of sows and the age of pregnancy, the amount of feeding was determined. Temperature and humidity may be adjusted according to pregnant sow characteristics. The pig manure was manually swept into the circular duct, and the pig urine flowed in automatically. When the pig was diarrhea, it was not cleaned well. It can be cleaned after sprinkling desiccant. The desiccant does not affect pig manure fermentation. The lighting window 105 adjusts the light intensity according to the characteristics of the pregnant sow. After being transferred to the farrowing sow building in the 7 days before delivery, the floors may be cleaned and sealed for ozone disinfection.

### Embodiment 5

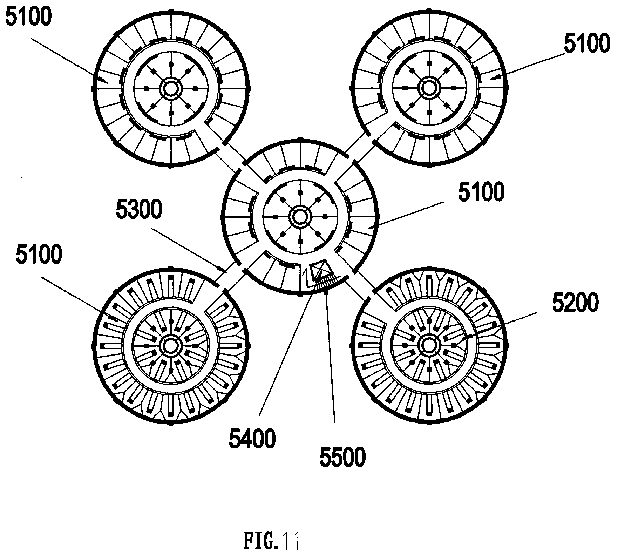

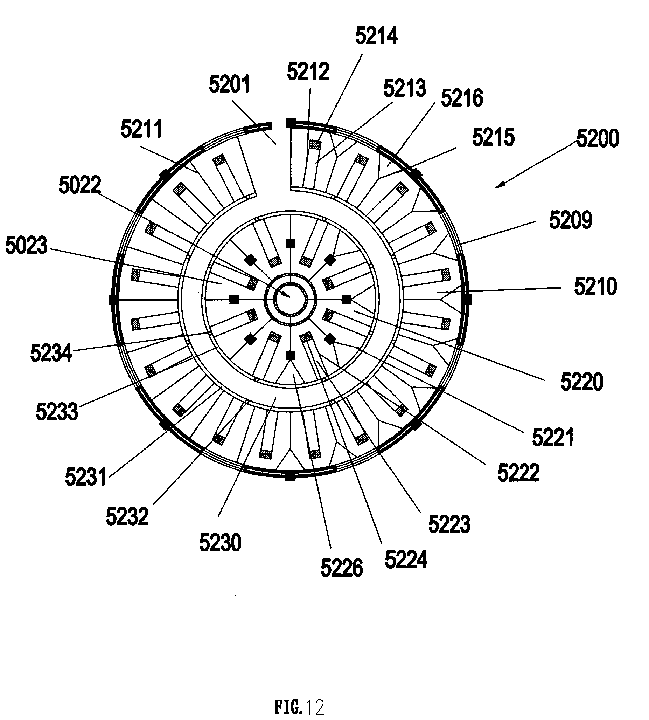

Referring to Fig. 11-Fig. 12, the invention consists of 5 circular buildings, each with 8 floors. In other embodiments, the number of floors may also be other numbers, wherein, three may be pregnant sow buildings 5100 and two may be farrowing sow building 5200, one pregnant sow building 5100 may be located in the central position, and the other two pregnant sow buildings 5100 and two farrowing sow buildings 5200 may be arranged a circular the pregnant sow building 5100 which may be in the central position, 90 degrees apart from each other, and between the central sow building 5100, each floor of each piggery building may be connected with the corridor 5300. The pregnant sow building 5100 in the central location may be provided with an elevator 5400 and stairs 5500.

Referring to Fig. 11-Fig. 12. The present invention provides a farrowing sow building with multi-floor structure, wherein, each floor structure is:

The farrowing sow building 5200, which may be round, from the center of the circle, may be divided into three main sections, an inner circle piggery building, an outer circle piggery building and an aisle 5230 between them. The outermost side may be surrounded by walls with windows 5209 at an intervals so as to facilitate lighting.

The outer circle piggery were divided into 20 chambers 5210 (one of which was used as a duct 5201) by a divider 5211. One small farrowing sow were kept in each chamber, and a total of 19 pigs were raised in the outer circle piggery. There may be a sow positioning unit in each chamber 5210, which may include a rectangular sow positioning space 5213 surrounded by a small divider 5212 and a feed trough 5214 at one end of the sow positioning space 5213. It is convenient for the mother to eat the same feed, and it can effectively adjust the feeding of suckling pigs without using teaching feeds. The feed trough 5214 may be located on the outward side, the sow cannot turn after entering, and the excreta can only be excreted on the side toward the aisle 5230, so as to keep the interior of the chamber 5210 clean. A section 5211 of the divider 5211 facing the outer wall may be movable or bendable. When used in winter, it may be bent at an angle to form a triangular area 5216. After it is bent, a lid is provided to cover above the triangular area 5216 to form a piglet heat preservation area. When there is no need for heat preservation in summer, it will be restored to its original shape, which will facilitate cleaning.

The inner circle piggery were divided into 8 chambers 5220 by a divider 5221. One small farrowing sows were kept in each chamber, and a total of 8 pigs were raised in the inner circle piggery. There may be a sow positioning unit in each chamber 5220, which may include a rectangular sow positioning space 5223 surrounded by a small divider 5222 and a feed trough 5224 at one end of the sow positioning space 5223. It is convenient for the mother to eat the same feed, and it can effectively adjust the feeding of suckling pigs without using teaching feeds. The feed trough 5224 may be located on the outward side, the sow cannot turn circular after entering, and the excreta can only be excreted on the side toward the aisle 5230, so as to keep the interior of the chamber 5210 clean. A section of the divider 5211 facing the aisle 5230 may be movable or bendable. When used in winter, it may be bent at an angle to form a triangular area 5226. After it is bent, a lid is provided to cover above the triangular area 5226 to form a piglet heat preservation area.

An outer groove 5231 may be arranged on one side of the aisle 5230 near the outer circle piggery, and a leak hole 5232 may be provided at every distance of the outer groove 5231. The floor of each single chamber 5210 may be tilted from the outer side to inside toward the outer groove 5231. In this way, pig manure can be swept into the feed trough 5231 by sweeping, and leaked into the leak hole 5232, pig urine flows in automatically. It is collected by the collection device at the bottom end of the first floor.

A inner groove 5233 may be formed on one side of the aisle 230 near the inner circle piggery, and a leak hole 5234 may be provided at an interval in the inner groove 5233. The floor of each single chamber 5220 may be tilted from the outer side to inside toward the inner groove 5233. In this way, pig manure can be swept into the inner groove 5212 by sweeping, and leaked into the leak hole 5234. Pig urine flows in automatically. It is collected by the collection device at the bottom end of the first floor.

Referring to Fig. 10, a first duct 1022 and a second duct 1023 nested along the symmetry axis may be arranged in the middle of the floor of farrowing sow building 5200; the cross-sectional diameter of the first duct 1022 may be 2 meters, and the cross-sectional diameter of the second duct 1023 may be 3.2 meters. The first duct 1022 on the inner side may be sealed at its top end, and the bottom end may be communicated with the air outlet of the air supply device 1025 by an air treatment duct 1024; the bottom end of the second duct 1023 on the outside may be sealed, the top communicates with the atmosphere by exhaust gas collection and treatment device 1027.

The air path is: the air supply device 1025 introduces fresh air from the outside into the first duct 1022. After the fresh air is introduced from the first duct, it may be sent through the second duct through the air inlet fan 1028 into the inner circle piggery and the outer circle piggery. Inside, it flows along the ceiling of the piggery, after passing through the outer wall of the piggery and then moving to the floor of the piggery and the fresh air becomes dirty air. The dirty air flows upwards through the second duct 1023 and may be purified by the exhaust gas collection and treatment device 1027 and discharged, thus completing the entire process of air circulation.

Further, a deflector may be provided at the air outlet of the air inlet fan 1028, so that the air inlet fan 1028 forms a uniform fan-shaped air outlet surface.

The air treatment duct 1024 has a length of 30-40 meters and a cross-sectional area of 6-8 square meters; the air treatment duct may be provided with an air supply device, a sensor, a spray cooling device, a refrigeration device, and a heating device; the sensor detects the air temperature and humidity of air sent to the air treatment duct by the air supply device; when the air humidity is high and the temperature is low, the heating device starts to heat the air to raise the temperature; when the air temperature is high and the humidity is low, the spray cooling device starts to cool and humidify the air; when the air temperature is high and the humidity is high, the refrigeration device starts to cool and dehumidify the air.

The spray cooling devices may be provided in three groups, base on the air temperature and humidity, the three spray cooling devices start one , two or three groups.

The pregnant sows were transferred to the farrowing building 7 days before farrowing, and were fed with sow feed feed. After 1 to 3-5 watering, it is transported to the feed troughs by the gear pump through the pipeline, and the sows may be allowed to feed freely for many times. It is convenient for the mother to eat the same feed, and it can effectively adjust the feeding of suckling pigs without using teaching feeds. Temperature and humidity may be adjusted according to sow characteristics. The temperature of the heat preservation chamber may be adjusted according to the piglet age. The pig manure was manually swept into the circular duct, and the pig urine flowed in automatically. When the pig was diarrhea, it was not cleaned well. It can be cleaned after sprinkling desiccant. The desiccant does not affect pig manure fermentation. The lighting window 105 adjusts the light intensity according to the characteristics of the sows. 25 to 30 days after delivery, sows and piglets may be transferred out of the farrowing sow building, and the floors may be cleaned and sealed for ozone disinfection.

### Embodiment 6

The pig raising method of the invention is:
For live pig production (feeding piglets to large pigs), using the structure of embodiment 1, the piglets may be kept in the first piggery building 100 for about 75 days, and then transferred directly to the other three piggery building for large pigs in the same floor. Due to the number is corresponding, it just happens to be completely transferred and there is no need to go downstairs. After the transfer, the first piggery building 100 can be replenished with a batch of piglets to form a production line.

In the case of sow rearing, the structure of the second embodiment is adopted. The pregnant sow building 800 is used for feeding pregnant sows. The sows may be transferred to the farrowing sow building 900 at the same floor in 7 days before the sow farrowing, and after the piglets are weaned, sows may be moved into a comprehensive building and piglets continue to feed for 7-15 days and then transfer.

If it is self-breeding and self-sustaining, refer to the practices of embodiment 1 and embodiment 2, allocate floors rationally.

The foregoing descriptions are merely preferred embodiments of the present invention, but the scope of protection of the present invention is not limited thereto. Any person skilled in the art can easily think of changes within the technical scope of the present invention. All the alternatives should be covered by the protection scope of the present invention. Therefore, the protection scope of the present invention should be based on the protection scope of the claims.

### Industrial applicability

The novel environment-friendly piggery of the invention is provided with advantages: a less floor space, strong functions such as wind resistance, snow resistance, strong and durable structure, automatic ventilation control, constant temperature and humidity, and floor air can be filtered and sterilized; The pollution-free intensification of pig-raising methods using this piggery building can be carried out using liquid fermentation feed throughout the day, feeding 3-6 meals a day, adopting automatic feeding, rational arrangement of herds, conforming to the pig's physiological habits at different ages, and reducing pig diseases and the situation of serious polyculture fights. It is provided with good industrial applicability.

## Claims

1. A novel environment-friendly piggery, comprising:
at least one circular or polyhedral piggery building, the polyhedron has at least five sides, and ventilation shafts provided in the middle of each floor of the piggery building;
the each floor declining from an outer edge to the ventilation shaft, the top end of each piggery building provided with an exhaust gas collection and treatment device in communication with the ventilation shaft, and a pig excreta collection device corresponding to the ventilation shaft at the bottom of the building.

2. The novel environment-friendly piggery according to claim 1, wherein
the floor of the piggery building is divided into a plurality of symmetrical chambers in a radial direction using dividers;
a first duct and a second duct are provided concentrically to a symmetry axis of the piggery building in the middle ventilation shaft of the piggery building; the interior first duct has a sealed top end, and a bottom end connected with an outlet of an air supply device; the exterior second duct has a bottom end in communication with a pig excreta collecting device, and a top end in communication with an atmosphere;
a wall of the first duct is an inner wall of the second duct, an outer wall of the second duct is an inner wall of the chamber, the second duct is provided with a hole for communicating with the chamber; a ceiling of the chamber is provided with an air inlet fan; fresh air is introduced from the first duct and then passed through the second duct through the pipeline, and sent into the chamber by the air inlet fan, dirty air in the chamber passes through the hole and enters the second duct to be discharged; the excreta in the chamber passes through the hole into the second duct then falls into the pig excreta collection device.

3. The novel environment-friendly piggery according to claim 2, wherein the top end of the second duct is connected to the atmosphere through an exhaust gas collection and treatment device; the dirty air in the piggery is discharged after being purified by the collection and treatment device through the second duct.

4. The novel environment-friendly piggery according to claim 1, wherein
the floor of the piggery building is divided into a plurality of symmetrical chambers in a radial direction using dividers;
a first duct is provided in the middle of the piggery building in a direction of a symmetry axis of the piggery building, the first duct having a sealed top end, and a bottom end connected to an air treatment duct;
the air treatment duct is provided with an air supply device, a sensor, a spray cooling device, a refrigeration device, and a heating device; the sensor detects the temperature and humidity of air sent to the air treatment duct by the air supply device; when the air humidity is high and the temperature is low, the heating device starts to heat the air to raise the temperature; when the air temperature is high and the humidity is low, the spray cooling device starts to cool and humidify the air; when the air temperature is high and the humidity is high, the refrigeration device starts to cool and dehumidify the air;
the first duct sends the treated air in the air treatment duct into each chamber;
the air treatment duct has a length of 30-40 meters and a cross-sectional area of 6-8 square meters; and the spray cooling devices are provided in three groups, based on the air temperature and humidity, the three spray cooling devices start one, two or three groups.

5. The novel environment-friendly piggery according to any one of claims 1-4, wherein a duct and auxiliary facility building is provided beside the piggery building, and the duct and auxiliary facility building is provided with an elevator and a stairs chamber; there are at least 4 floors in the piggery building, a connection part is set between the duct and auxiliary facility building so that each floor of the piggery is connected horizontally with the duct and auxiliary facility building; each piggery building is provided with a positive pressure ventilation system and feed delivery system.

6. The novel environment-friendly piggery according to claim 2, wherein four piggery buildings are provided, namely a first piggery building, a second piggery building, a third piggery building and a fourth piggery building; the four piggery buildings are arranged in squares; the first piggery building is a nursery piggery building, and the second piggery building is a piggery building for medium pigs, the third piggery building and the fourth piggery building are piggery buildings for large pigs; a duct and auxiliary facility building communicating with the four piggery buildings respectively are provided in the middle of the four piggery buildings.

7. The novel environment-friendly piggery according to any one of claims 2-4, wherein the floor of each chamber of the piggery building is provided with three steps descending sequentially from a side distal to the ventilation shaft to a side proximate to the ventilation shaft; an outermost step is a pig sleeping area; a middle step is a pig feeding area; and a innermost step is the pig excretion area.

8. The novel environment-friendly piggery according to claim 7, wherein the floor of each step declines from an outer side to an inner side; and the innermost step communicates with the second duct so that excretions in the excretion area enter the second duct through a hole and fall into the pig excreta collection device;
a height of the step is 5-15 cm, a floor slope of the step is 1%-3%;
the outermost step area accounts for 50%-60% of the area of the piggery, and the innermost step area accounts for 10%-15% of the area of the piggery.

9. The novel environment-friendly piggery according to any one of claims 1-4, wherein the piggery building may include five circular buildings, three are pregnant sow buildings and two are farrowing sow building, one pregnant sow building is located in a central position, and the other two pregnant sow buildings and two farrowing sow buildings are arranged around the pregnant sow building which is in the central position, 90 degrees apart from each other, and each floor of each piggery building is connected to the pregnant sow building in the central location by a connection part; the pregnant sow building in the central location is provided with elevators and stairs;
there is a first duct is provided in the middle ventilation shaft of each piggery building along a direction of the symmetry axis of the piggery building, the top end of the first duct is sealed, and the bottom end is connected to an air treatment duct; and
the air treatment duct is provided with an air supply device, a sensor, a spray cooling device, a refrigeration device, and a heating device; the sensor detects the temperature and humidity of air sent to the air treatment duct by the air supply device; when the air humidity is high and the temperature is low, the heating device starts to heat the air to raise the temperature; when the air temperature is high and the humidity is low, the spray cooling device starts to cool and humidify the air; when the air temperature is high and the humidity is high, the refrigeration device starts to cool and dehumidify the air;

10. The novel environment-friendly piggery according to claim 9, wherein each floor of the farrowing sow building from an inside to an outside is principally divided into three lanes, an inner circle piggery is located inside, an outer circle piggery is located outside and an aisle between them; the inner circle piggery and outer circle piggery are divided into multiple chambers with a divider; each chamber is provided with a sow positioning unit, including a rectangular sow positioning space by small divider and a feed trough at one end of the sow positioning space, the feed trough is located at an end away from the aisle;
the second duct is provided with a hole communicating to the inner circle piggery on the floor; a ceiling of the piggery is provided with an inlet fan; fresh air is introduced from the first duct and passes through the second duct through the pipeline and been sent into the piggery by the air inlet fan, and the dirty air in the piggery is discharged through the hole into the second duct;
the section of the outer circle piggery divider of farrowing sow building facing the outer wall is movable or bendable, bendable at an angle to form a triangular area, a lid is provided after bending above the triangular area to form a piglet heat preservation area; the inner circle piggery is divided into a chamber by a divider, the section of the divider facing the aisle is movable or bendable, bendable at an angle to form a triangular area, a lid is provided after bending above the triangular area to form a piglet heat preservation area;
a side of the aisle of the farrowing sow building near the outer circle piggery is provided with an external groove, and a floor of each chamber of the outer circle piggery declines from the outside to the inside toward the external groove, the external groove is provided with a leak hole at an interval, the pig excreta in the outer circle piggery falls from the leak hole into the pig excreta collection device on the first floor; the side of the aisle near the inner circle piggery is provided with an internal groove; and the floor of each chamber of the inner circle piggery declines from the outside to the inside toward the internal groove, the internal groove is provided with a leak hole at an interval, the pig excreta in the inner circle piggery falls into the pig excreta collection device on the first floor from the leak hole.

11. The novel environment-friendly piggery according to claim 9, wherein each floor of the pregnant sow building floor is divided into three lanes from an inside to an outside, the inner circle piggery located inside, and the outer circle piggery located outside, and the aisle between the them; the second duct is provided with a hole in communication with the inner circle piggery on the floor; the ceiling of the piggery is provided with an inlet fan; fresh air is introduced from the first duct and passes through the second duct through the pipeline and sent into the piggery by the air inlet fan, and the dirty air in the piggery is discharged through the hole into the second duct;
the outer circle piggery is divided into multiple chambers in the radial direction, each chamber is used for rearing 2 pregnant sows, and each chamber is provided with a feed trough, the inner circle piggery is also divided by a radial divider into multiple chambers, each chamber is used for rearing 2 pregnant sows, and each chamber is provided with a feed trough; the side of the aisle near the outer circle piggery is provided with a groove, and floor of the chamber of each outer circle piggery declines from the outside to the inside toward the groove, the groove is provided with a leak hole at an interval, the pig excreta of the outer circle piggery falls from the leak hole into the pig excreta collection device on the first floor; the inner circle piggery declines from the outside to the inside toward the second duct; excretions in the piggery enter the second duct through the hole to the pig excreta collection device;
a feed trough is provided on the side of the outer circle piggery near the aisle, and a feed trough is provided on the side of the inner circle piggery near the aisle.

12. The novel environment-friendly piggery according to claim 5, wherein the piggery is four circular piggery buildings, a first piggery building, a second piggery building, a third piggery building and a fourth piggery building respectively, the four piggery buildings are arranged in squares, each circular building is provided with 5-10 floors, a duct and auxiliary facility building is provided in the middle of the four piggery buildings, among four piggery buildings, the first piggery is a nursery piggery building and the remaining three are piggery buildings for medium and large pigs;
the floor of the nursery piggery is divided into functional areas by a divider, and each floor is divided into eight chambers; each chamber is provided with a heat preservation chamber on a side of the outer edge; the heat preservation chamber is provided with a heating device, and the heat preservation chamber is provided with a circular feed trough near the side of ventilation shaft; the top end of the heat preservation chamber is provided with an aisle;
the floor of the piggery buildings for medium and large pigs is divided into functional areas by dividers, each floor is divided into eight chambers; each chamber is provided with a feed trough on the outside, and each feed trough is divided into eight feed positions by steel pipelines; and an aisle is provided above the feed trough.

13. The novel environment-friendly piggery according to claim 5, wherein the piggery has four circular piggery buildings; among the four circular piggery buildings, one is a pregnant sow building, two for the farrowing sow building, the remaining one is the replacement gilt, empty sow, boar comprehensive building;
in the pregnant sow building, each floor of the pregnant sow building is divided into eight chambers with dividers; each chamber is divided into six positioning units in the radial direction by small dividers, and the floor of the positioning unit is provided with a cold water circulation system; each chamber is provided with an activity chamber; the activity chamber is located between the positioning unit and the ventilation shaft; each positioning unit is provided with a feed trough by one side of the outer edge of the circle, and an aisle is provided above the feed trough;
in the farrowing sow building, each floor is divided into 12 equal parts, and into 12 chambers by dividers, one of the chambers serves as a duct, and each of the other chambers is rearing a farrowing sow; each chamber is provided with a positioning unit, the positioning unit is located in the middle of the chamber, the floor of the positioning unit is provided with a cold water circulation system, the feed trough is located at one end of the positioning unit, and each chamber is provided with a heat preservation chamber near the end of the outer surrounding wall, the heat preservation chamber is provided with a heating device, an aisle is provided on the top end of the heat preservation chamber.
